# EUROPÄISCHE PATENTSCHRIFT

(11) **EP 2 406 035 B1**
(45) Veröffentlichungstag und Bekanntmachung des Hinweises auf die Patenterteilung: **05.05.2021**
(21) Anmeldenummer: 10701834.3
(22) Anmeldetag: 14.01.2010
(51) Int. Cl.: B23Q 11/00, B25F 5/00

(54) **HANDWERKZEUGMASCHINE**
HAND TOOL
OUTIL À MAIN

(30) Priorität: 12.03.2009 DE 102009001501
(43) Veröffentlichungstag der Anmeldung: 18.01.2012
(73) Patentinhaber: Robert Bosch GmbH, 70442 Stuttgart (DE)
(72) Erfinder: KAKUK, Jozsef, H-3529 Miskolc (HU); CSEHI, Oliver, H-3508 Miskolc (HU); HESSE, Juergen, 71144 Steinenbronn (DE); TIEDE, Steffen, 71083 Herrenberg (DE)
(86) Internationale Anmeldenummer: PCT/EP2010/050377
(87) Internationale Veröffentlichungsnummer: WO 2010/102846

(56) Entgegenhaltungen:
- EP-A1- 0 412 645
- EP-A2- 0 794 038
- EP-A2- 1 964 649
- WO-A1-02/34462
- DE-A1- 2 705 388
- DE-A1-102004 029 220

## Beschreibung

### Stand der Technik

Die Erfindung geht aus von einer Handwerkzeugmaschine nach dem Oberbegriff des Anspruchs 1.

Es ist bereits eine Handwerkzeugmaschine, insbesondere eine Bohrmaschine, mit zumindest einem Motor, einem Lüfter und einem Luftleitkanal, der dazu vorgesehen ist, mit einer Staubabsaugvorrichtung wirkungsmäßig verbunden zu werden, vorgeschlagen worden.

Eine Handwerkzeugmaschine gemäß dem Oberbegriff des Anspruchs 1 ist aus EP 1 964 649 A2 bekannt.

### Offenbarung der Erfindung

Die Erfindung geht aus von einer Handwerkzeugmaschine, insbesondere einer Bohrmaschine, mit den Merkmalen von Anspruch 1.

Es wird vorgeschlagen, dass der Luftleitkanal und der Motor zumindest teilweise auf in Rotationsachsenrichtung des Lüfters entgegengesetzten Seiten des Lüfters angeordnet sind. Unter einem "Motor" soll insbesondere eine krafterzeugende Vorrichtung verstanden werden. Vorteilhaft weist der Motor dazu einen Rotor und einen Stator auf. Unter dem Begriff "Lüfter" soll insbesondere eine Vorrichtung verstanden werden, die dazu vorgesehen ist, einen Luftstrom zu erzeugen. Insbesondere soll unter einem "Luftleitkanal" ein Mittel verstanden werden, das dazu vorgesehen ist, den Luftstrom von einer Eintrittsstelle in den Luftleitkanal zu dem Lüfter zu führen. Insbesondere soll unter einer "Rotationsachsenrichtung" eine Richtung parallel zu einer Rotationsachse des Lüfters verstanden werden. Unter der Wendung "zumindest teilweise auf entgegengesetzten Seiten" soll insbesondere verstanden werden, dass zumindest ein Bereich des Luftleitkanals und zumindest ein Bereich des Motors auf einer Linie parallel zu der Rotationsachsenrichtung des Lüfters auf verschiedenen Seiten des Lüfters angeordnet sind. Unter einer "Handwerkzeugmaschine" soll insbesondere eine Bohrmaschine und/oder eine andere, dem Fachmann als sinnvoll erscheinende Handwerkzeugmaschine, wie insbesondere eine Säge, ein Hobel, ein Schrauber, eine Fräse, ein Schleifer, ein Winkelschleifer und/oder ein Multifunktionswerkzeug, verstanden werden, wobei unter einer "Bohrmaschine" auch eine Schlagbohrmaschine, eine Akkubohrmaschine und/oder ein Bohrhammer verstanden werden soll. Durch die erfindungsgemäße Ausgestaltung der Handwerkzeugmaschine kann eine besonders große Luftmenge durch den Luftleitkanal von dem Lüfter angesaugt werden und dabei eine Verbindung zu der Staubabsaugvorrichtung vorteilhaft angeordnet sein. Des Weiteren ist der Motor vor Verschmutzungen aus dem Luftstrom geschützt, die durch den Luftleitkanal zu dem Lüfter gelangen, weil ein Motorraum des Motors und der Luftleitkanal wirkungsmäßig unverbunden sind.

Der Lüfter dazu vorgesehen ist, jeweils zumindest einen Luftstrom von zwei in Rotationsachsenrichtung des Lüfters entgegengesetzten Seiten des Lüfters anzusaugen. Unter dem Begriff "Luftstrom" soll insbesondere bewegte Luft verstanden werden, die sich bei einem Betrieb der Handwerkzeugmaschine entlang eines Bereichs, beispielsweise des Luftleitkanals und/oder des Motorraums, zu dem Lüfter hin bewegt. Unter "Ansaugen" soll insbesondere verstanden werden, dass der Lüfter Luft mittels eines von ihm erzeugten Unterdrucks in seinen Wirkungsbereich bewegt. Durch ein Ansaugen von Luft auf zwei unterschiedlichen Seiten des Lüfters kann eine vorteilhaft kurze Länge des Luftleitkanals und so ein geringer Strömungswiderstand erreicht werden.

Des Weiteren wird vorgeschlagen, dass der Lüfter als Radiallüfter ausgebildet ist. Unter einem "Radiallüfter" soll insbesondere ein Lüfter verstanden werden, der Luft des Luftstroms an einem radial inneren Bereich ansaugt und an einem radial äußeren Bereich abstößt. Eine Bewegung bzw. Beschleunigung der Luft des Luftstroms erfolgt vorteilhaft mittels einer Zentrifugalkraft und/oder durch eine Impulsübertragung mittels Lüfterflügeln des Lüfters auf die Luft. Mittels des Radiallüfters kann konstruktiv einfach ein besonders starker Luftstrom erreicht werden.

Ferner wird vorgeschlagen, dass der Lüfter eine in einem radial äußeren Bereich angeordnete Stützscheibe aufweist. Vorteilhaft ist die Stützscheibe dazu vorgesehen, Lüfterflügel des Lüfters zu stabilisieren. Unter der Wendung "in einem radial äußeren Bereich" soll insbesondere außerhalb eines inneren Bereichs verstanden werden, der einen Radius von wenigstens 20 %, vorteilhaft von wenigstens 50 %, besonders vorteilhaft von wenigstens 70 % eines Gesamtradius des Lüfters aufweist. Vorzugsweise ist die Stützscheibe als Ringscheibe ausgebildet. Durch die in dem radial äußeren Bereich angeordnete Stützscheibe kann ein besonders stabiler Lüfter bereitgestellt werden, der zusätzlich vorteilhaft Luft von zwei Seiten ansaugen kann.

Zudem wird vorgeschlagen, dass der Lüfter zumindest eine Zuluftausnehmung aufweist, die dazu vorgesehen ist, eine große Luftansaugwirkfläche bereitzustellen. Unter einer "Zuluftausnehmung" soll insbesondere ein ringkanalförmiger Bereich des Lüfters verstanden werden, in dem Luft eine Rotationsachse des Lüfters um 360° umströmen kann. Insbesondere ist die Zuluftausnehmung koaxial zu der Rotationsachse des Lüfters angeordnet. Vorteilhaft kann die Luft die Rotationsachse des Lüfters innerhalb der Zuluftausnehmung auf einer Kreisbahn umströmen. Unter einer "Luftansaugwirkfläche" soll insbesondere eine Fläche verstanden werden, durch die Luft in einen Bereich des Lüfters einströmt, in dem Lüfterflügel des Lüfters bei einem Betrieb des Lüfters rotieren. Durch die große Luftansaugwirkfläche kann konstruktiv einfach ein vorteilhaft starker Luftstrom erreicht werden.

In einer vorteilhaften Ausbildung der Erfindung wird eine Abluftöffnung vorgeschlagen, die in Umfangsrichtung des Lüfters einen Winkelbereich größer als 180° einschließt, und/oder mehrere Abluftöffnungen, die in Umfangsrichtung des Lüfters über einen Winkelbereich größer als 180° verteilt angeordnet sind. Vorteilhaft schließt die Abluftöffnung einen Winkelbereich größer als 270° ein und/oder sind die Abluftöffnungen in einem Winkelbereich größer als 270° verteilt angeordnet. Durch die daraus resultierende vorteilhaft große Abluftöffnung bzw. die großen Abluftöffnungen kann ein besonders niedriger Strömungswiderstand, der einer Abluft entgegensteht, erreicht werden.

In einer weiteren Ausgestaltung wird eine Staubabsaugvorrichtungsbefestigung vorgeschlagen, die dazu vorgesehen ist, eine mechanische und/oder wirkungsmäßige Verbindung herzustellen. Unter einer "mechanischen Verbindung" soll insbesondere eine Verbindung verstanden werden, die in zumindest einem Betriebszustand eine Bewegung der Handwerkzeugmaschine relativ zu einer weiteren Vorrichtung verhindert. Vorteilhaft handelt es sich bei dieser weiteren Vorrichtung um eine Staubabsaugvorrichtung. Unter einer "wirkungsmäßigen Verbindung" soll insbesondere eine Verbindung verstanden werden, über die zumindest eine Leistung übertragen wird. Vorteilhaft ist die Leistung als der Luftstrom ausgebildet. Durch die Staubabsaugvorrichtungsbefestigung kann eine Staubabsaugvorrichtung vorteilhaft einfach für einen Bediener an die Handwerkzeugmaschine gekoppelt werden.

Des Weiteren wird zumindest ein in Rotationsachsenrichtung des Lüfters an den Lüfter angrenzendes Bauteil vorgeschlagen, in dessen Axialfläche zumindest ein Bereich des Luftleitkanals eingebracht ist. Unter einer "Axialfläche" soll insbesondere eine Fläche verstanden werden, die größtenteils in etwa senkrecht zu der Rotationsachsenrichtung angeordnet ist. Unter einem "angrenzenden Bauteil" soll insbesondere ein Bauteil verstanden werden, das in zumindest einem Bereich von dem Lüfter lediglich von einem Luftspalt, durch den der Luftstrom zumindest teilweise strömt, getrennt ist. Hierbei ist dieser Bereich vorteilhaft an einer Stelle des Bauteils angeordnet, die dem Lüfter am nächsten ist. Durch den in das angrenzende Bauteil eingebrachten Luftleitkanal kann konstruktiv einfach der Lüfter mit der Staubabsaugvorrichtung verbunden bzw. gekoppelt werden.

Ferner wird zumindest eine in Rotationsachsenrichtung des Lüfters an den Lüfter angrenzende Lagerbrücke vorgeschlagen, in deren Axialfläche zumindest ein Bereich des Luftleitkanals eingebracht ist. Unter einer "Lagerbrücke" soll insbesondere ein Bauteil verstanden werden, das von einem Lager übertragene Kräfte weiterleitet und/oder aufnimmt. Vorteilhaft erfüllt die Lagerbrücke dabei noch zumindest eine weitere Funktion, wie beispielsweise eine Lagerung einer weiteren Welle, einer Zwischenwelle, einer Spindelwelle und/oder eine Lagerung zumindest eines Zahnrads. Durch den in die Lagerbrücke eingebrachten Luftleitkanal kann konstruktiv besonders einfach und Bauteile sparend der Lüfter mit der Staubabsaugvorrichtung verbunden bzw. gekoppelt werden.

Zudem wird vorgeschlagen, dass der Luftleitkanal eine Rotationsachse des Lüfters um wenigstens 90° umschließt. Vorteilhaft umschließt der Luftleitkanal die Rotationsachse des Lüfters um wenigstens 180°. Durch das Umschließen der Rotationsachse des Lüfters um wenigstens 90° kann eine besonders große Luftansaugwirkfläche erreicht werden.

In einer vorteilhaften Ausbildung der Erfindung wird ein Getriebegehäuse vorgeschlagen, das den Luftleitkanal zumindest streckenweise auf zumindest einer Seite begrenzt, wodurch in diesem Bereich der Luftleitkanal ohne zusätzlichen Bearbeitungsvorgang erstellt werden kann.

In einer weiteren Ausgestaltung wird vorgeschlagen, dass zumindest ein Bereich des Luftleitkanals halbkreisförmig ausgebildet ist, wodurch eine besonders große Luftansaugwirkfläche mit einem geringen Strömungswiderstand erreicht werden kann.

Ferner wird vorgeschlagen, dass zumindest ein Bereich des Luftleitkanals L-förmig ausgebildet ist. Unter "L-förmig" soll insbesondere verstanden werden, dass der Luftleitkanal zumindest einen ersten geraden Bereich und einen zweiten geraden Bereich aufweist, der zu dem ersten geraden Bereich in etwa rechtwinklig angeordnet ist. Der L-förmige Luftleitkanal kann besonders einfach produziert werden.

### Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Handwerkzeugmaschine und eine mit der Handwerkzeugmaschine verbundene Staubabsaugvorrichtung,
- Fig. 2: einen Schnitt der Handwerkzeugmaschine aus Figur 1 mit einem Lüfter, einem Motor und einer Lagerbrücke,
- Fig. 3: eine Detailansicht der Lagerbrücke aus Figur 2 gemäß einer ersten Alternative und
- Fig. 4: eine Detailansicht der Lagerbrücke aus Figur 2 in einem weiteren alternativen Ausführungsbeispiel.

### Beschreibung der Ausführungsbeispiele

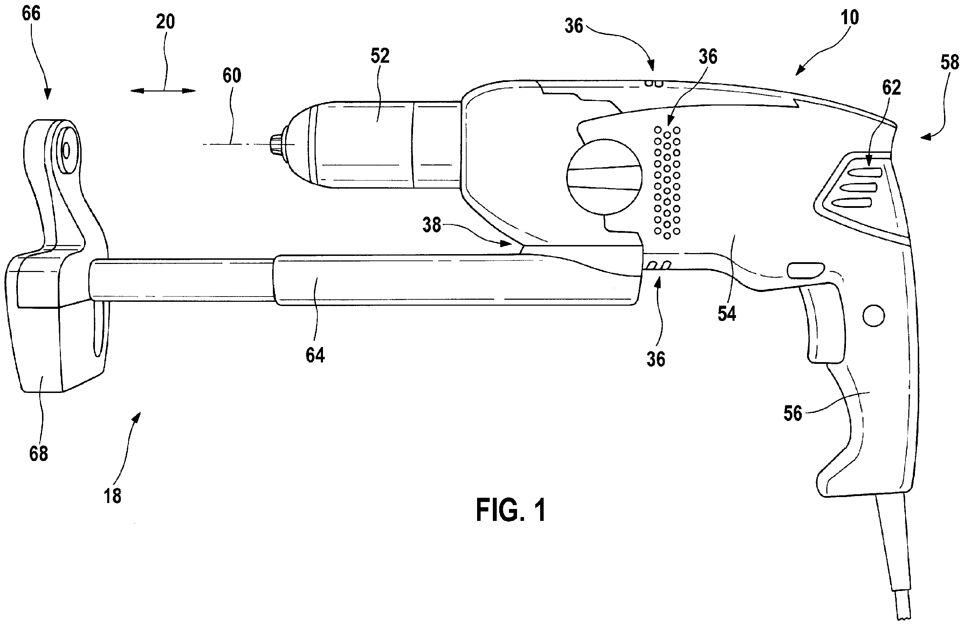

Figur 1 zeigt eine als Bohrmaschine ausgebildete Handwerkzeugmaschine 10 und eine mit der Handwerkzeugmaschine 10 verbundene Staubabsaugvorrichtung 18. Die Handwerkzeugmaschine 10 weist eine Werkzeughalterung 52 und ein pistolenförmiges Handwerkzeugmaschinengehäuse 54 mit einem Handgriff 56, einem Handwerkzeugmaschinenkörper 58 und einer Staubabsaugvorrichtungsbefestigung 38 auf. Die Werkzeughalterung 52 ist als Werkzeugfutter ausgebildet und ist um eine Werkzeugachse 60 drehbar. Die Werkzeughalterung 52 ist in einem vorderen Bereich der Handwerkzeugmaschine 10 angeordnet.

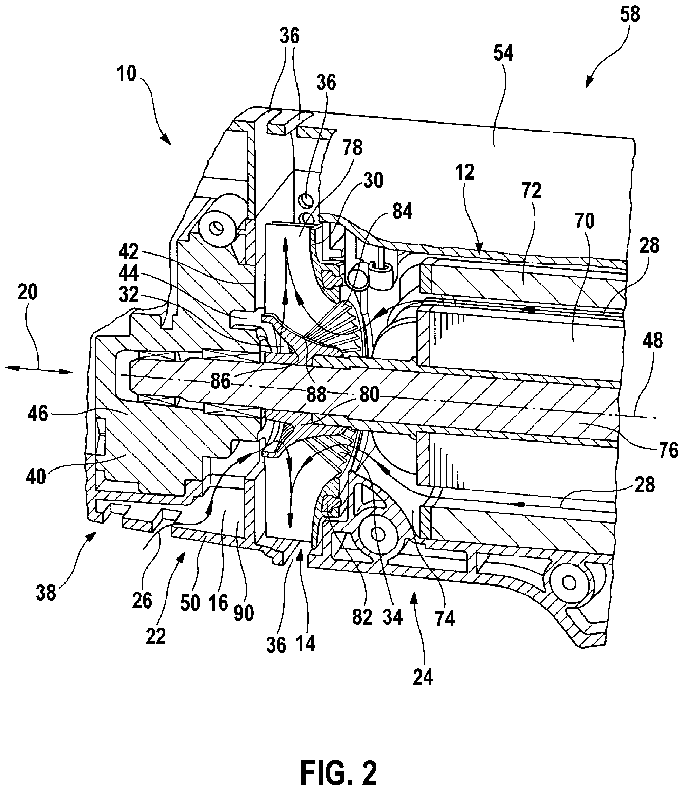

Der Handgriff 56 ist in einem hinteren, der Werkzeughalterung 52 abgewandten Bereich der Handwerkzeugmaschine 10 angeordnet und erstreckt sich annähernd im rechten Winkel von der Werkzeugachse 60 weg. In einem mittleren Bereich der Handwerkzeugmaschine 10, das heißt zwischen dem vorderen Bereich und dem hinteren Bereich, ist der Handwerkzeugmaschinenkörper 58 angeordnet. Ebenfalls in dem hinteren Bereich weist die Handwerkzeugmaschine 10 Luftöffnungen 62 auf. An dem mittleren Bereich, auf einer dem Handgriff 56 zugewandten Seite des Handwerkzeugmaschinenkörpers 58, ist die in Figur 2 gezeigte Staubabsaugvorrichtungsbefestigung 38 angeordnet. Die Staubabsaugvorrichtungsbefestigung 38 stellt eine mechanische und wirkungsmäßige Verbindung zwischen der Handwerkzeugmaschine 10 und der Staubabsaugvorrichtung 18 her.

Die Staubabsaugvorrichtung 18 weist einen Teleskoparm 64, einen Staubabsaugkopf 66 und eine Filtervorrichtung 68 auf. Die Filtervorrichtung 68 ist als ein Bohrstaubsammelbehälter und eine nicht näher dargestellte Filtereinheit ausgebildet, die innerhalb des Bohrstaubsammelbehälters angeordnet ist. Ein Abstand zwischen der Handwerkzeugmaschine 10 und dem Staubabsaugkopf 66 ist mittels des Teleskoparms 64 veränderbar. Ein von einem Lüfter 14 der Handwerkzeugmaschine 10 erzeugter Luftstrom 26 erstreckt sich bzw. bewegt Luft während eines Betriebs der Handwerkzeugmaschine 10 von dem Staubabsaugkopf 66 durch die Filtervorrichtung 68 und den Teleskoparm 64 zu der Staubabsaugvorrichtungsbefestigung 38 der Handwerkzeugmaschine 10.

Ferner weist die Handwerkzeugmaschine 10, wie Figur 2 zeigt, einen Motor 12, den Lüfter 14, einen Luftleitkanal 16 und ein Getriebegehäuse 50 auf. Der Motor 12 ist als Elektromotor ausgebildet und weist einen Rotor 70, einen Stator 72 und einen Motorraum 74 auf. Der Motorraum 74 ist zwischen dem Rotor 70 und dem Stator 72 angeordnet. Eine Welle 76 der Handwerkzeugmaschine 10 verbindet den Rotor 70 und den Lüfter 14 drehfest. Der Motor 12 bzw. der Rotor 70 dreht die Welle 76 und somit den Lüfter 14 um eine Rotationsachse 48. Das Getriebegehäuse 50 ist in dem vorderen Bereich der Handwerkzeugmaschine 10, das heißt zwischen dem Lüfter 14 und der Werkzeughalterung 52, angeordnet.

Der Lüfter 14 ist als ein Radiallüfter ausgebildet und weist eine in einem radial äußeren Bereich, das heißt in einem von der Rotationsachse 48 mindestens etwa um 40 % eines Radius des Lüfters 14 beabstandeten Bereich, angeordnete Stützscheibe 30 auf. Die Stützscheibe 30 stabilisiert Lüfterflügel 78 des Lüfters 14. Die Stützscheibe 30 ist als eine Ringscheibe ausgebildet und einstückig mit den Lüfterflügeln 78 und einer Lüfternabe 80 des Lüfters 14 ausgebildet. Die Stützscheibe 30 ist auf einer dem Motor 12 axial zugewandten Seite des Lüfters 14 angeordnet. Die Lüfternabe 80 verbindet den Lüfter 14 drehfest mit der Welle 76. Des Weiteren weist der Lüfter 14 eine Tachoscheibe 82 auf, die eine Drehgeschwindigkeit des Lüfters 14 bzw. des Motors 12 während eines Betriebs der Handwerkzeugmaschine 10 messbar macht.

Der Lüfter 14 saugt während eines Betriebs zwei Luftströme 26, 28 von zwei in Rotationsachsenrichtung 20 des Lüfters 14 entgegengesetzten Seiten 22, 24 des Lüfters 14 an. Der eine der Luftströme 26, 28 ist der Luftstrom 26, der sich während eines Betriebs von der Staubabsaugvorrichtung 18 über die Staubabsaugvorrichtungsbefestigung 38 und durch den Luftleitkanal 16 zu dem Lüfter 14 erstreckt bzw. der Luft auf diesem Weg bewegt. Demnach verbindet der Luftleitkanal 16 den Lüfter 14 wirkungsmäßig mit der Staubabsaugvorrichtung 18.

Der andere Luftstrom 28 erstreckt sich bzw. bewegt Luft von den Luftöffnungen 62 (vgl. Figur 1), die in dem hinteren Bereich der Handwerkzeugmaschine 10 angeordnet sind, durch den Motorraum 74 bis zu dem Lüfter 14. Dieser Luftstrom 28 kühlt während eines Betriebs den Motor 12. In dem Lüfter 14 gelangt die Luft des Luftstroms 28 durch eine Mittelausnehmung 84 der ringförmigen Stützscheibe 30 zu den Lüfterflügeln 78 des Lüfters 14. Die Mittelausnehmung 84 ist wie die Stützscheibe 30 auf einer dem Motor 12 axial zugewandten Seite des Lüfters 14 angeordnet. Die Mittelausnehmung 84 ist koaxial zur Stützscheibe 30 zwischen der Lüfternabe 80 und der Stützscheibe 30 angeordnet und ist als Ringspalt der Stützscheibe 30 ausgebildet. Der Luftleitkanal 16 und der Motor 12 sind teilweise auf in Rotationsachsenrichtung 20 des Lüfters 14 entgegengesetzten Seiten 22, 24 des Lüfters 14 angeordnet. Eine dem Motor 12 axial abgewandte Seite des Lüfters 14 ist stützscheibenfrei ausgebildet.

Der Lüfter 14 weist zwei Zuluftausnehmungen 32, 34 auf. Die Zuluftausnehmungen 32, 34 sind wirkungsmäßig mit dem Luftleitkanal 16 bzw. mit dem Motorraum 74 verbunden und zwischen den Lüfterflügeln 78 und der Lüfternabe 80 angeordnet. Axial in der Mitte des Lüfters 14, zwischen den beiden Zuluftausnehmungen 32, 34, sind die Lüfterflügel 78 mit der Lüfternabe 80 verbunden. Dabei sind die Lüfterflügel 78 einstückig mit der Lüfternabe 80 ausgebildet. Die Zuluftausnehmungen 32, 34 sind als Ringkanäle mit keilförmigem Profil ausgebildet und koaxial mit dem Lüfter 14 angeordnet. Dabei liegen Spitzen 86, 88 der keilförmigen Zuluftausnehmungen 32, 34 an der Lüfternabe 80 in Richtung einer axialen Mitte des Lüfters 14. Eine breite Seite der keilförmigen Zuluftausnehmungen 32, 34 liegt an den Seiten 22, 24 des Lüfters 14. Die Zuluftausnehmungen 32, 34 stellen zwei große Luftansaugwirkflächen des Lüfters 14 bereit. Die Mittelausnehmung 84 verbindet die dem Motor 12 zugewandte Zuluftausnehmung 34 wirkungsmäßig mit dem Motorraum 74.

Die Handwerkzeugmaschine 10 weist mehrere, nämlich eine, dem Fachmann als sinnvoll erscheinende Anzahl von Abluftöffnungen 36 auf. Die Abluftöffnungen 36 sind an dem Handwerkzeugmaschinenkörper 58 des Handwerkzeugmaschinengehäuses 54 in Umfangsrichtung des Lüfters 14 über einen Winkelbereich von etwa 300° verteilt angeordnet. Der Lüfter 14 drückt die Luft der beiden Luftströme 26, 28 durch die Abluftöffnungen 36 aus der Handwerkzeugmaschine 10 heraus. Währenddessen vermischt sich die Luft der beiden Luftströme 26, 28.

In Rotationsachsenrichtung 20 auf einer der Werkzeughalterung 52 zugewandten Seite 22 des Lüfters 14 grenzt an den Lüfter 14 ein Bauteil 40 bzw. eine Lagerbrücke 46 der Handwerkzeugmaschine 10 an. In einer dem Lüfter 14 zugewandten Axialfläche 42 der Lagerbrücke 46 ist ein Bereich 44a oder 44b des Luftleitkanals 16 eingebracht. Die Lagerbrücke 46 befestigt ein Lager, das die Welle 76, die den Rotor 70 drehfest mit dem Lüfter 14 verbindet, lagert.

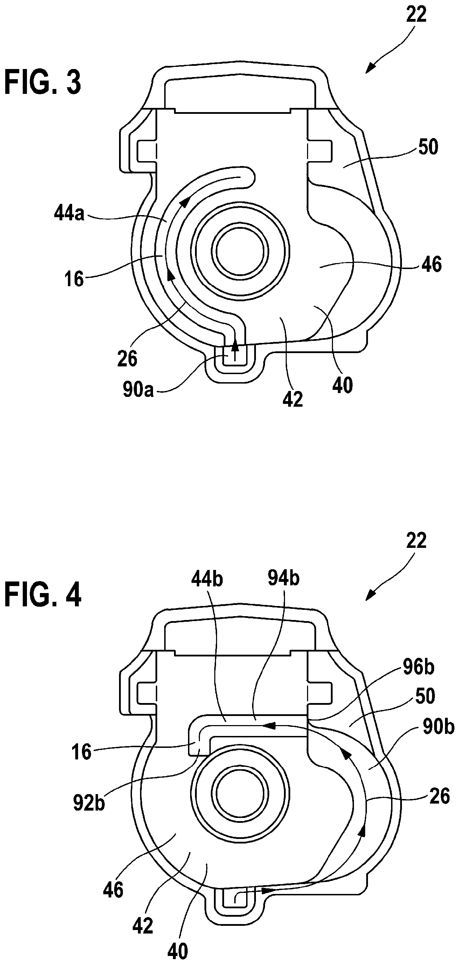

In Figur 3 und Figur 4 sind zwei Ausführungsbeispiele der Lagerbrücke 46 gemäß der Erfindung gezeigt. Die zwei Ausführungsbeispiele unterscheiden sich insbesondere in einer Ausführung eines den Luftstrom 26 führenden Bereichs 44a oder 44b des Luftleitkanals 16. Zur Unterscheidung der Ausführungsbeispiele ist der Buchstabe a in den Bezugszeichen des Ausführungsbeispiels in der Figur 3 durch den Buchstaben b in den Bezugszeichen des Ausführungsbeispiels in der Figuren 4 ersetzt. Die nachfolgenden Beschreibungen beschränken sich im Wesentlichen auf die Unterschiede zwischen den zwei Ausführungsbeispielen. Bezüglich gleich bleibender Bauteile, Merkmale und Funktionen kann auf die Beschreibung, insbesondere in den Figuren 1 und 2, verwiesen werden.

Figur 3 zeigt eine Detailansicht eines Ausführungsbeispiels der Lagerbrücke 46 aus Figur 2. Es ist dargestellt, dass der Luftleitkanal 16 in einem Bereich 44a die Rotationsachse 48 des Lüfters 14 halbkreisförmig um 180° umschließt. In dem Bereich 44a ist der Luftleitkanal 16 mit der dem Luftleitkanal 16 zugewandten Zuluftausnehmung 32 des Lüfters 14 wirkungsmäßig verbunden. Zwischen dem halbkreisförmigen Bereich 44a des Luftleitkanals 16 und der Staubabsaugvorrichtungsbefestigung 38 wird der Luftleitkanal 16 von einem Freiraum 90a zwischen der Lagerbrücke 46 und dem Getriebegehäuse 50 gebildet. Hier begrenzt das Getriebegehäuse 50 den Luftleitkanal 16 auf drei Seiten.

Figur 4 zeigt, wie Figur 3, eine Detailansicht eines alternativen Ausführungsbeispiels der Lagerbrücke 46 der Handwerkzeugmaschine 10 aus Figur 2. Der Luftleitkanal 16 der Handwerkzeugmaschine 10 ist in einem Bereich 44b L-förmig ausgebildet. Das heißt, der Luftleitkanal 16 ist auf einer Strecke 92b des Bereichs 44b parallel zu einer Haupterstreckung des Handgriffs 56 der Handwerkzeugmaschine 10 in der dem Lüfter 14 der Handwerkzeugmaschine 10 zugewandten Axialfläche 42 der Lagerbrücke 46 eingebracht. Daran schließt sich eine Strecke 94b des Bereichs 44b des Luftleitkanals 16 an, die um 90° zu der Haupterstreckung des Handgriffs 56 gekippt angeordnet ist. Zwischen einem Ende 96b dieser Strecke 94b und der Staubabsaugvorrichtungsbefestigung 38 der Handwerkzeugmaschine 10 wird der Luftleitkanal 16 von einem Freiraum 90b zwischen dem Getriebegehäuse 50 der Handwerkzeugmaschine 10 und der Lagerbrücke 46 gebildet. Der Freiraum 90b erstreckt sich um etwas mehr als 90° radial um die Rotationsachse 48 des Lüfters 14. Ein Abstand zwischen dem Luftleitkanal 16 und der Rotationsachse 48 des Lüfters 14 kann dabei, wie es dem Fachmann als sinnvoll erscheint, ausgestaltet sein.

## Patentansprüche

1. Handwerkzeugmaschine, insbesondere Bohrmaschine, mit zumindest einem Motor (12), einem Lüfter (14) und einem Luftleitkanal (16), der dazu vorgesehen ist, mit einer Staubabsaugvorrichtung (18) wirkungsmäßig verbunden zu werden, wobei der Luftleitkanal (16) und der Motor (12) zumindest teilweise auf in Rotationsachsenrichtung (20) des Lüfters (14) entgegengesetzten Seiten (22, 24) des Lüfters (14) angeordnet sind, **dadurch gekennzeichnet, dass** der Lüfter (14) dazu vorgesehen ist, jeweils zumindest einen Luftstrom (26, 28) von zwei in Rotationsachsenrichtung (20) des Lüfters (14) entgegengesetzten Seiten (22, 24) des Lüfters (14) anzusaugen und dass die Handwerkzeugmaschine (10) zumindest eine Abluftöffnung (36) aufweist, durch die der Lüfter (14) die Luft der beiden Luftströme (26, 28) derart herausdrückt, dass sich die Luft der beiden Luftströme (26, 28) vermischt.

2. Handwerkzeugmaschine nach Anspruch 1, **dadurch gekennzeichnet, dass** der Lüfter (14) als Radiallüfter ausgebildet ist.

3. Handwerkzeugmaschine nach einem der vorhergehenden Ansprüche, **dadurch gekennzeichnet, dass** der Lüfter (14) eine in einem radial äußeren Bereich angeordnete Stützscheibe (30) aufweist.

4. Handwerkzeugmaschine nach einem der vorhergehenden Ansprüche, **dadurch gekennzeichnet, dass** der Lüfter (14) zumindest eine Zuluftausnehmung (32, 34) aufweist, die dazu vorgesehen ist, eine große Luftansaugwirkfläche bereitzustellen.

5. Handwerkzeugmaschine nach einem der vorhergehenden Ansprüche, **gekennzeichnet durch** eine Abluftöffnung (36), die in Umfangsrichtung des Lüfters (14) einen Winkelbereich größer als 180° einschließt und/oder mehrere Abluftöffnungen (36), die in Umfangsrichtung des Lüfters (14) über einen Winkelbereich größer als 180° verteilt angeordnet sind.

6. Handwerkzeugmaschine nach einem der vorhergehenden Ansprüche, **gekennzeichnet durch** eine Staubabsaugvorrichtungsbefestigung (38), die dazu vorgesehen ist, eine mechanische und/oder wirkungsmäßige Verbindung herzustellen.

7. Handwerkzeugmaschine nach einem der vorhergehenden Ansprüche, **gekennzeichnet durch** zumindest ein in Rotationsachsenrichtung (20) des Lüfters (14) an den Lüfter (14) angrenzendes Bauteil (40), in dessen Axialfläche (42) zumindest ein Bereich (44) des Luftleitkanals (16) eingebracht ist.

8. Handwerkzeugmaschine nach einem der vorhergehenden Ansprüche, **gekennzeichnet durch** zumindest eine in Rotationsachsenrichtung (20) des Lüfters (14) an den Lüfter (14) angrenzende Lagerbrücke (46), in deren Axialfläche (42) zumindest ein Bereich (44) des Luftleitkanals (16) eingebracht ist.

9. Handwerkzeugmaschine nach einem der vorhergehenden Ansprüche, **dadurch gekennzeichnet, dass** der Luftleitkanal (16) eine Rotationsachse (48) des Lüfters (14) um wenigstens 90° umschließt.

10. Handwerkzeugmaschine nach einem der vorhergehenden Ansprüche, **gekennzeichnet durch** ein Getriebegehäuse (50), das den Luftleitkanal (16) zumindest streckenweise auf zumindest einer Seite begrenzt.

11. Handwerkzeugmaschine nach einem der vorhergehenden Ansprüche, **dadurch gekennzeichnet, dass** zumindest ein Bereich (44a) des Luftleitkanals (16) halbkreisförmig ausgebildet ist.

12. Handwerkzeugmaschine nach einem der vorhergehenden Ansprüche, **dadurch gekennzeichnet, dass** zumindest ein Bereich (44b) des Luftleitkanals (16) L-förmig ausgebildet ist.

13. Handwerkzeugmaschine nach Anspruch 10, **dadurch gekennzeichnet, dass** das Getriebegehäuse (50) den Luftleitkanal (16) auf drei Seiten begrenzt.

## Claims

1. Portable power tool, in particular drilling machine, having at least a motor (12), a fan (14) and an air-guiding channel (16) which is intended to be operatively connected to a dust extraction device (18), wherein the air-guiding channel (16) and the motor (12) are arranged at least partially on opposite sides (22, 24) of the fan (14) as seen in the direction (20) of the axis of rotation of the fan (14), **characterized in that** the fan (14) is intended to draw in each case at least one air flow (26, 28) from two opposite sides (22, 24) of the fan (14) as seen in the direction (20) of the axis of rotation of the fan (14), and **in that** that the portable power tool (10) has at least one exhaust opening (36) through which the fan (14) pushes out the air of the two air flows (26, 28) such that the air of the two air flows (26, 28) mixes.

2. Portable power tool according to Claim 1, **characterized in that** the fan (14) is in the form of a radial fan.

3. Portable power tool according to either of the preceding claims, **characterized in that** the fan (14) has a supporting disc (30) arranged in a radially external region.

4. Portable power tool according to one of the preceding claims, **characterized in that** the fan (14) has at least one inlet air opening (32, 34), which is intended to provide a large effective air-intake area.

5. Portable power tool according to one of the preceding claims, **characterized by** an exhaust opening (36), which encloses an angular range greater than 180° in the circumferential direction of the fan (14), and/or a plurality of exhaust openings (36), which are arranged in a manner distributed through an angular range greater than 180° in the circumferential direction of the fan (14) .

6. Portable power tool according to one of the preceding claims, **characterized by** a dustextraction-device fastening (38), which is intended to establish a mechanical and/or operative connection.

7. Portable power tool according to one of the preceding claims, **characterized by** at least one component (40) which adjoins the fan (14) as seen in the direction (20) of the axis of rotation of the fan (14) and into the axial face (42) of which at least one region (44) of the air-guiding channel (16) has been introduced.

8. Portable power tool according to one of the preceding claims, **characterized by** at least one bearing bridge (46) which adjoins the fan (14) as seen in the direction (20) of the axis of rotation of the fan (14) and into the axial face (42) of which at least one region (44) of the air-guiding channel (16) has been introduced.

9. Portable power tool according to one of the preceding claims, **characterized in that** the air-guiding channel (16) encloses an axis of rotation (48) of the fan (14) through at least 90°.

10. Portable power tool according to one of the preceding claims, **characterized by** a transmission housing (50), which delimits the air-guiding channel (16) at least in parts on at least one side.

11. Portable power tool according to one of the preceding claims, **characterized in that** at least one region (44a) of the air-guiding channel (16) is formed in a semicircular manner.

12. Portable power tool according to one of the preceding claims, **characterized in that** at least one region (44b) of the air-guiding channel (16) is formed in an L-shaped manner.

13. Portable power tool according to Claim 10, **characterized in that** the transmission housing (50) delimits the air-guiding channel (16) on three sides.

## Revendications

1. Machine-outil à main, en particulier perceuse, comprenant au moins un moteur (12), un ventilateur (14) et un conduit de guidage d'air (16) qui est prévu pour être connecté fonctionnellement à un dispositif d'aspiration de poussière (18), le conduit de guidage d'air (16) et le moteur (12) étant disposés au moins en partie sur des côtés (22, 24) opposés du ventilateur (14), dans la direction de l'axe de rotation (20) du ventilateur (14), **caractérisée en ce que** le ventilateur (14) est prévu pour aspirer, à chaque fois, au moins un flux d'air (26, 28) depuis deux côtés (22, 24) opposés du ventilateur (14) dans la direction de l'axe de rotation (20) du ventilateur (14) et **en ce que** la machine-outil à main (10) présente au moins une ouverture d'évacuation d'air (36) à travers laquelle le ventilateur (14) expulse l'air des deux flux d'air (26, 28) de telle sorte que l'air des deux flux d'air (26, 28) se mélange.

2. Machine-outil à main selon la revendication 1, **caractérisée en ce que** le ventilateur (14) est réalisé sous forme de ventilateur radial.

3. Machine-outil à main selon l'une quelconque des revendications précédentes, **caractérisée en ce que** le ventilateur (14) présente un disque de support (30) disposé dans une région radialement extérieure.

4. Machine-outil à main selon l'une quelconque des revendications précédentes, **caractérisée en ce que** le ventilateur (14) présente au moins un évidement d'alimentation en air (32, 34) qui est prévu pour fournir une grande surface active d'aspiration d'air.

5. Machine-outil à main selon l'une quelconque des revendications précédentes, **caractérisée par** une ouverture d'évacuation d'air (36) qui, dans la direction périphérique du ventilateur (14), couvre une plage angulaire supérieure à 180° et/ou par plusieurs ouvertures d'évacuation d'air (36) qui sont réparties dans la direction périphérique du ventilateur (14) sur une plage angulaire supérieure à 180°.

6. Machine-outil à main selon l'une quelconque des revendications précédentes, **caractérisée par** une fixation de dispositif d'aspiration de poussière (38) qui est prévue pour établir une liaison mécanique et/ou fonctionnelle.

7. Machine-outil à main selon l'une quelconque des revendications précédentes, **caractérisée par** au moins un composant (40) adjacent au ventilateur (14) dans la direction de l'axe de rotation (20) du ventilateur (14), dans la surface axiale (42) duquel est introduite au moins une région (44) du conduit de guidage d'air (16).

8. Machine-outil à main selon l'une quelconque des revendications précédentes, **caractérisée par** au moins un pont palier (46) adjacent au ventilateur (14) dans la direction de l'axe de rotation (20) du ventilateur (14), dans la surface axiale (42) duquel est introduite au moins une région (44) du conduit de guidage d'air (16).

9. Machine-outil à main selon l'une quelconque des revendications précédentes, **caractérisée en ce que** le conduit de guidage d'air (16) entoure un axe de rotation (48) du ventilateur (14) sur au moins 90°.

10. Machine-outil à main selon l'une quelconque des revendications précédentes, **caractérisée par** un boîtier de transmission (50) qui limite le conduit de guidage d'air (16) au moins par sections sur au moins un côté.

11. Machine-outil à main selon l'une quelconque des revendications précédentes, **caractérisée en ce qu'**au moins une région (44a) du conduit de guidage d'air (16) est réalisée en forme de demi-cercle.

12. Machine-outil à main selon l'une quelconque des revendications précédentes, **caractérisée en ce qu'**au moins une région (44b) du conduit de guidage d'air (16) est réalisée en forme de L.

13. Machine-outil à main selon la revendication 10, **caractérisée en ce que** le boîtier de transmission (50) limite le conduit de guidage d'air (16) sur trois côtés.
